# EUROPEAN PATENT APPLICATION

(11) **EP 2 704 067 A1**
(43) Date of publication of application: **05.03.2014**
(21) Application number: 13178005.8
(22) Date of filing: 25.07.2013
(51) Int. Cl.: G06Q 10/08

(54) **Supplier retrieval apparatus and supplier retrieval method**

(30) Priority: 31.08.2012 JP 2012190869
(71) Applicant: Hitachi Ltd., Tokyo (JP)
(72) Inventor: Adachi, Tetsuro, Chiyoda-ku, Tokyo 100-8220 (JP); Tateishi, Jun, Chiyoda-ku, Tokyo 100-8220 (JP); Taguchi, Kentaro, Chiyoda-ku, Tokyo 100-8220 (JP); Kiuchi, Hidenori, Chiyoda-ku, Tokyo 100-8220 (JP)
(74) Representative: Calderbank, Thomas Roger

(57) **Abstract**

A supplier retrieval apparatus (100) is offered which has a control section (10) for accepting an input made by a buyer or a supplier from a supplier information storage portion (310) where classification codes of parts capable of being offered by partner suppliers are stored, a computing section (20) for extracting combinations of classification codes capable of being offered by candidate alternative suppliers in response to an input of retrieval conditions from a buyer and calculating the degrees of similarity with classification codes being capable of being offered from the partner suppliers, and an output portion (130) for outputting the results of the calculations.

## Description

The present invention relates to a technique permitting a buyer (business enterprise) that orders parts for manufacturing or assembling products to retrieve alternative suppliers of parts heretofore used and, more particularly, to a technique for retrieving candidate suppliers available for a transaction for information about the suppliers and extracting candidate suppliers from which alternative parts can be procured.

In order to purchase parts from plural companies with a view to avoid procurement risks such as supply chain interruption or bankruptcy of transacting suppliers, it is customary to select suppliers capable of offering alternatives to normally purchased parts. One conventional method of selecting a supplier capable of supplying alternative parts is to empirically extract candidate reliable suppliers capable of supplying the alternative parts from suppliers which actually performed transactions with the buyer based on past experience of the buyer itself. Arbitrary suppliers are selected from among the extracted candidate suppliers. Furthermore, a supplier to which a final order will be placed is generally determined after making overall decisions as to whether the candidates can supply parts satisfying required design specifications, can supply a required amount of parts, can deliver them up to a desired delivery date, and the price can be within an assumed budget. In the prior art, when such candidate suppliers are extracted, profile information about the suppliers (open information such as information about addresses and amount of sales) is previously accumulated in a database. Candidate alternative suppliers can be extracted by retrieving the database. According to the technique of JP-A-2002-342626, it is possible for a buyer to extract suppliers capable of supplying parts meeting desired specifications by storing the categories (classification codes) to which ordered parts belong in a database as supplier information and conducting a retrieval using the classification codes as keys.

In businesses for selecting suppliers, it is necessary to make overall decisions as to whether they can supply parts meeting required design specifications, whether a required amount of supply can be achieved, whether the parts can be delivered up to a desired delivery date, and whether the price can be kept within an assumed budget. The required design specifications arise from design departments and quality assurance departments of companies in terms of shapes of parts, used materials, functions realized by parts and durability, weatherability, sense of usage, texture, feeling of raw material, distortions, and deformations under assumed use environments. The overall decisions are made by consensus of every department associated with procured parts in addition to the above-described departments. Each buyer is required to quickly extract candidate suppliers that would satisfy these requirements, based on past experience of transactions made by the buyer itself. The present invention pertains to a technique that assists in doing decision making for procurement such that suppliers from which a buyer can procure alternative parts can be selected accurately and quickly.

When a buyer selects suppliers, a personal decision is made while taking account of past achievements of orders, transactional experience, and requirements of the above-described associated departments. Therefore, depending on a buyer, a different supplier for alternative parts may be selected depending on the presence or absence of past transactional experience or on the contents of experience. Consequently, there is the problem that it is not assured that an alternative supplier can offer parts meeting required design specifications as a result of such different results of decision making done by buyers for selection of suppliers.

One available conventional method for solving this problem consists of causing categories (classification codes) of parts to which ordered parts belong to be previously stored as supplier information in a database and permitting a buyer to retrieve the database using the classification codes as keys, thus extracting alternative suppliers capable of supplying alternative parts. According to the above-cited JP-A-2002-342626, management information about each individual supplier is previously stored in a database. The management information includes information about summaries of suppliers, the number of employees of each supplier, items of business, main clients, suppliers of main materials, main subcontractors, contents of the newest account settlement, main apparatuses and pieces of equipment, technical level, quality management method, organizational structure, and public relations activities undertaken by suppliers. Suppliers can be retrieved for by making given inputs to entry fields for maker code, maker name, item code (large classification), item code (moderate classification), item name, and location which have been previously defined. However, in the technique of the above-cited JP-A-2002-342626, when retrieval is performed by item name, for example, different suppliers often supply parts which have the same design specifications (performing the same function and role) but bear different item names. For this reason, it is difficult to retrieve by item name. In the case of make-to-order products, parts supplied by existing suppliers conform to specifications required by a client (buyer). Other suppliers who are not transacting now do not always supply parts of the same specifications. Hence, it is not easy to extract alternative suppliers if retrieval is performed by item name or classification code of part supplied by a supplier. It is a preferred aim of the present invention to provide a technique of extracting suppliers who have sufficient supply capability to be alternative suppliers when the suppliers cannot be extracted easily if retrieval is performed only by item names or classification codes of parts currently being offered by the suppliers.

The above-described aim may be achieved, for example, by adopting configurations as set forth in the accompanying claims.

The present disclosure includes a plurality of means which may achieve the foregoing aim. One example thereof is accomplished by a supplier retrieval apparatus having a computing section for receiving supplier information including the names of supplier companies and classification information about parts capable of being offered by the supplier companies, storing the received information as supplier information, receiving retrieval conditions regarding alternative suppliers from buyers, and calculating degrees of similarity between existing suppliers acting as procurement sources and candidate alternative suppliers and a listing up-output portion for listing up candidate alternative suppliers having priority order information from information about the degrees of similarity and outputting the list of the candidate alternative suppliers.

### (Technical Advantage)

In businesses for determining alternative suppliers, candidate alternative suppliers which meet specification conditions required by a buyer can be extracted and calculated quickly and accurately.

Other objects, features and advantages of the invention will become apparent from the following description of the embodiments of the invention taken in conjunction with the accompanying drawings.

In the drawings:
FIG. 1 is a block diagram showing one example of configuration of a supplier retrieval apparatus.
FIG. 2 is a block diagram showing one example of hardware configuration of the present apparatus.
FIG. 3 is a flowchart illustrating one example of flow of processing performed by the supplier retrieval apparatus.
FIG. 4 is a diagram showing one example of configuration of an input screen for entering supplier information.
FIG. 5 is a diagram showing one example of configuration of an input screen for entering supplier retrieval conditions.
FIG. 6 is a table showing one example of configuration of classification master data information.
FIG. 7 is a flowchart illustrating a processing routine performed to make decisions on degrees of similarity of suppliers.
FIG. 8 is a table showing one example of configuration of a supplier information storage portion.
FIG. 9 is a table showing one example of configuration of a retrieval condition storage portion.
FIG. 10 shows an example of results of collation of retrieval source supplier classification codes.
FIG. 11 shows an example of results of collation of candidate alternative supplier-specific classification codes.
FIG. 12 is a table showing one example of configuration of a decision result information storage portion.
FIG. 13 is a table showing one example of configuration of information about the distances among classification codes.
FIG. 14 is a diagram showing one example of procedure for calculating the scores of alternative suppliers.
FIG. 15 is a diagram showing one example of configuration of output screen.

One embodiment of the present invention is hereinafter described with reference to some of the drawings. The present embodiment provides an apparatus and method for calculating the degrees of similarity between existing suppliers (procurement sources) and candidate alternative suppliers and offering candidate alternative suppliers to a buyer to permit the buyer to select alternative suppliers from which the buyer can procure alternative parts and materials.

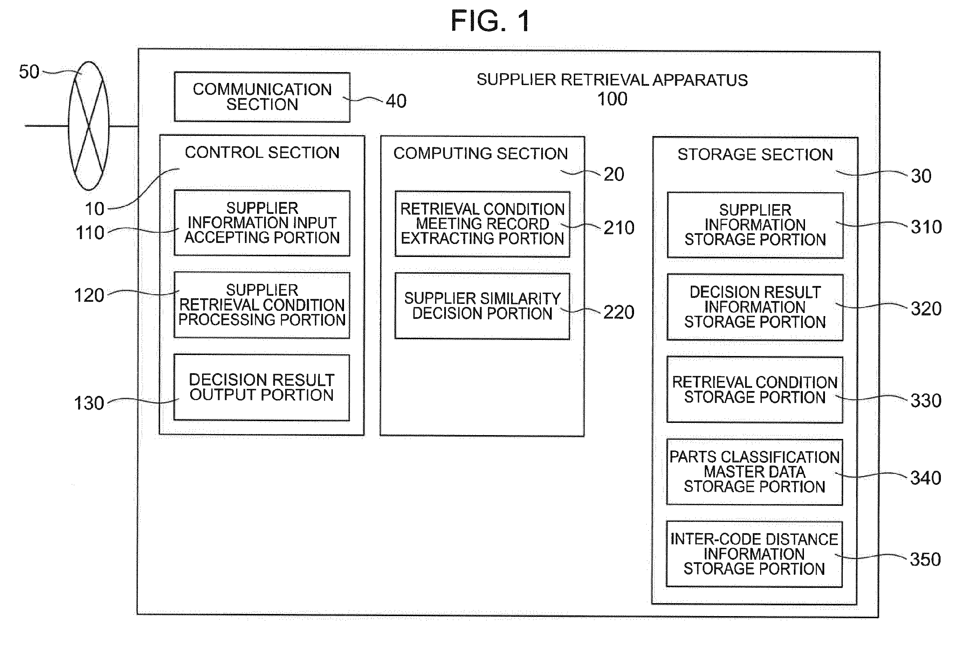

FIG. 1 shows one example of configuration of a supplier retrieval apparatus, 100, associated with the present embodiment of the invention. This supplier retrieval apparatus 100 is configured including a control section 10, a computing section 20, a storage section 30, and a communication section 40. Information necessary for processing performed by the computing section 20 can be obtained via a network 50 while using the communication section 40 as an interface. Usually, the network 50 is a LAN (local area network) managed by an organization of users. The network is not restricted to this example. The network 50 may include the Internet or other public telecommunication network, a WAN (wide area network), a VPN (virtual private network), or other public lines. The control section 10 receives supplier information sent by a buyer or a supplier via the network 50 by means of a supplier information input accepting portion 110. The received information is stored in a supplier information storage portion 310 of the storage section 30. Retrieval conditions regarding alternative suppliers are received by a retrieval condition processing portion 120. Computational processing (described later) is assigned to the computing section 20. The results of processing are stored in a decision result information storage portion 320 of the storage section 30. The information stored in the decision result information storage portion 320 of the storage section 30 is received by a decision result output portion 130 of the control section 10 and presented to a buyer. The computing section 20 has retrieval conditions meeting record extracting portion 210 for extracting supplier names acting as retrieval keys from the retrieval conditions accepted by the retrieval condition processing portion 120 and extracting classification codes offered by the suppliers. Furthermore, the computing section 20 has a supplier similarity decision portion 220 for making decisions on (i.e., selecting) suppliers capable of supplying classification codes similar to the classification codes offered by the suppliers from information about supplier names and classification codes stored in the supplier information storage portion 310.

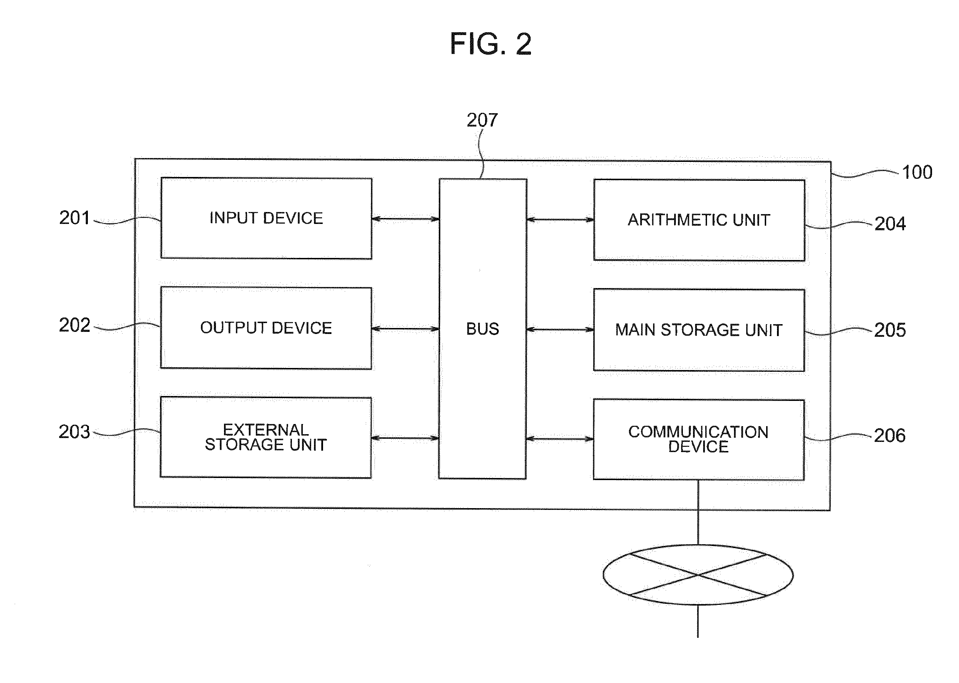

FIG. 2 is a block diagram showing one example of hardware configuration of the supplier retrieval apparatus 100. In the present embodiment, the supplier retrieval apparatus 100 can be a PC (personal computer), workstation, server machine, smartphone, electronic tablet, or other device. The supplier retrieval apparatus 100 has an input device 201, an output device 202, an external storage unit 203, an arithmetic unit 204, a main storage unit 205, a communication device 206, and a data bus 207 interconnecting these devices and units. For example, the input device 201 is a keyboard, mouse, stylus pen, other pointing device, information reader (such as a barcode reader), or an audio input device. The output device 202 is a display device for providing a display, for example. The external storage unit 203 is a hard disk device, flash memory, or other nonvolatile storage device. The arithmetic unit 204 is a CPU (central processing unit), for example. The main storage unit 205 is a memory such as a RAM (random access memory). The communication device 206 is either a wireless communication device that performs wireless communications via an antenna or a wired communication device that performs wired communications via a network cable.

The storage section 30 of the supplier retrieval apparatus 100 is realized by the main storage unit 205 or the external storage unit 203 of the supplier retrieval apparatus 100. The control section 10 and computing section 20 of the supplier retrieval apparatus 100 are realized by computer programs that cause the arithmetic unit 204 of the supplier retrieval apparatus 100 to perform processing. The programs are stored in the main storage unit 205 or in the external storage unit 203. When they are run, they are loaded into the main storage unit 205 and executed by the arithmetic unit 204. The communication section 40 of the supplier retrieval apparatus 100 is realized by the communication device 206 of the supplier retrieval apparatus 100. When suppliers are retrieved for, an ordering party reports the retrieval conditions to the supplier retrieval apparatus 100.

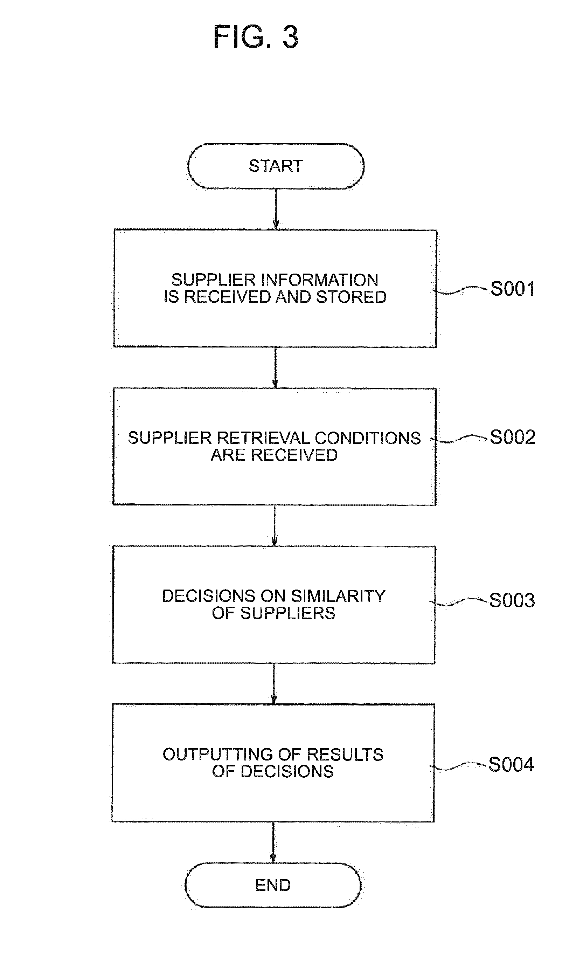

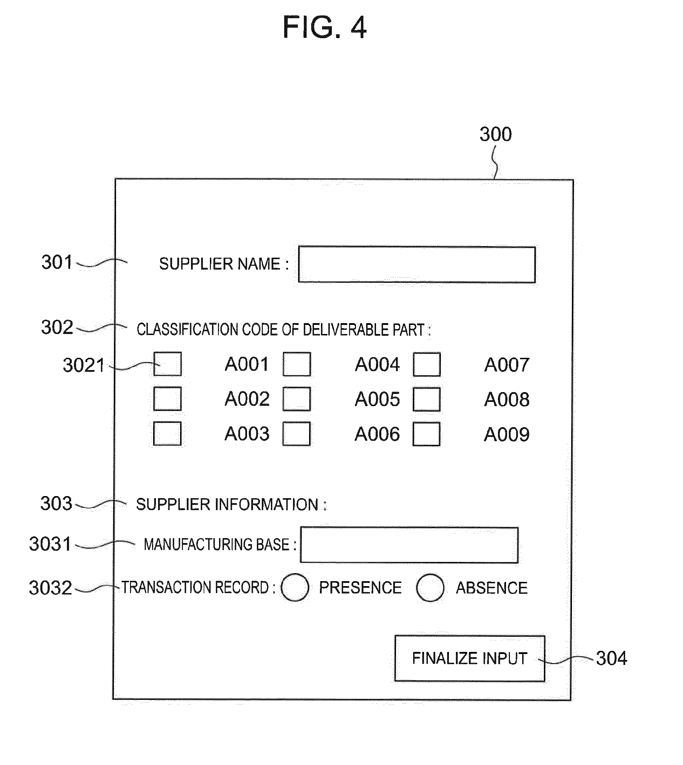

FIG. 3 is a flowchart illustrating the flow of processing performed in the control section 10 and computing section 20 of the supplier retrieval apparatus 100. When a request for starting storage of supplier information from a buyer or a supplier is received, the supplier information input accepting portion 110 forms a supplier information entry region 300 shown in FIG. 4, displays the information on the output device 202, and starts various processing operations of the computing section 20.

First, the control section 10 accepts supplier information including at least supplier names and classification codes and stores them in the supplier information storage portion 310 of the storage section 30 (step S001).

FIG. 4 shows one example of configuration of the supplier information entry region 300. The entry region 300 includes at least a supplier name entry field 301 for entering a supplier name, a classification code entry field 302 for entering the classification code 312 of a part that can be offered, and a make decision button 304. A list of classification codes may be previously displayed in the classification code entry field 302 to prompt a user to make a choice, thus assisting the user to make an input. For example, according to item 3021 in the classification code entry field 302, an input provided by a choice of a classification code can be accepted by the use of a check box. The supplier is allowed to offer plural classification codes. The classification code entry field 302 may be a text entry field or a text entry box, in which case the user may directly enter a classification code.

The classification codes of parts that can be offered from a supplier may be presented from the supplier side. Alternatively, a buyer may conduct researches and enter the classification codes. The information accepted at the above-described step may be supplier information other than supplier names and classification codes capable of being offered from a supplier. According to the example of input screen of FIG. 4, the supplier information may be manufacturing base information 3031 or past transaction records 3032. The manufacturing base information 3031 is information about a nation or region in which the manufacturing bases of a supplier are located, for example. The past transaction records 3032 are information indicating whether or not a buyer and a supplier transacted with each other in practice.

Data about transaction records can also be obtained from a database in which data about past transactional results managed by a buyer is stored. With respect to the results of transactions, very old information may not be informative and, therefore, it is effective to obtain data indicating whether there was a transaction during a specified period of time (e.g., within 1 year or within three years from now on).

The make decision button 304 is used to store input information, which is received at the supplier information entry region 300, into the supplier information storage portion 310.

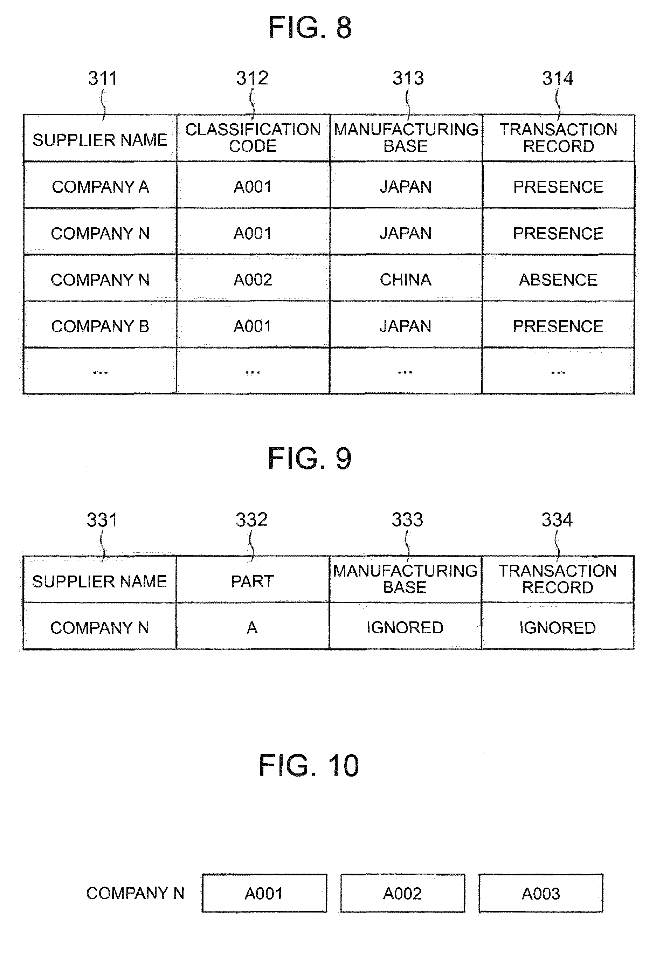

FIG. 8 shows one example of configuration of data table stored in the supplier information storage portion 310. At least a supplier name field 311 and a classification code field 312 are stored in the supplier information storage portion 310. The names of companies that are suppliers are entered in the supplier name field 311. The classification codes of parts that can be supplied from suppliers are entered in the classification code field 312. For example, it can be seen from the first record (the second row) of the table that supplier "company A" can offer parts of classification code "'A001". That is, it is seen that "company A" indicative of a supplier name is placed in the supplier name field 311, while "A001" indicative of the classification code of parts that can be offered is placed in the classification code field 312.

In step S001 of the flowchart of FIG. 3, the control section 10 enters the value, which has been entered in the supplier name entry field 301 after accepted at the supplier information entry region 300, into the supplier name field 311 of the supplier information storage portion 310 and enters the value entered in the classification code entry field 302 into the classification code field 312 of the supplier information storage portion 310.

The supplier information 303 accepted at the screen of FIG. 4 may be stored in the supplier information storage portion 310, in addition to supplier name and classification code. For example, manufacturing base information and transaction records which are accepted at the screen of FIG. 4 may be stored in the manufacturing base information storage portion 313 and the transaction record information storage portion 324, respectively, of the supplier information storage portion 310.

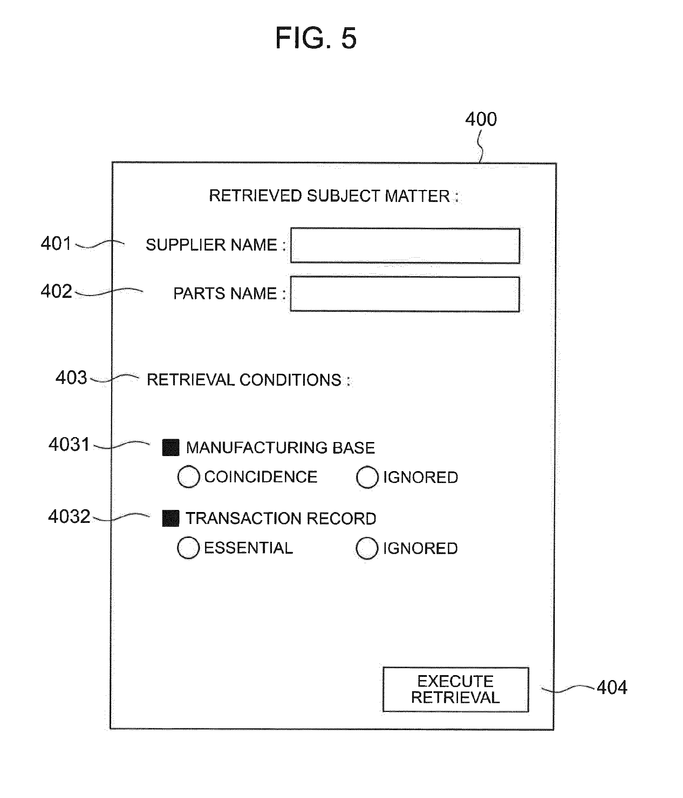

Referring back to FIG. 3, the control section 10 receives retrieval conditions for retrieving suppliers from which a buyer can procure alternative parts, receives a request for start of processing, constitutes a supplier retrieval condition entry region 400 shown in FIG. 5, and displays it on the output device 202. The received information is information of existing suppliers from which parts and materials have been procured heretofore and information related to the existing supplies, and is used to retrieve alternative suppliers.

The control section 10 receives supplier retrieval conditions including at least supplier name and parts name (step S002). In particular, in step S002, the control section 10 stores the value, which is accepted at the supplier retrieval condition entry region 400 and has been entered in a supplier name entry field 401, into a supplier name field 331 of a retrieval condition storage portion 330 and stores the value entered in a parts name entry field 402 into a parts name field 332.

FIG. 5 shows one example of configuration of the supplier retrieval condition entry region 400. This entry region 400 has at least the supplier name entry field 401, the parts name entry field 402, and a retrieval execute button 404.

The information accepted at the above-described steps may represent retrieval conditions other than existing supplier names and parts names. According to FIG. 5, other retrieval conditions may be coincidence 4031 of manufacturing base information and the presence or absence of transaction record 4032. When alternative suppliers are extracted, the coincidence 4031 of manufacturing base information indicates whether or not there is a match with any manufacturing base of existing suppliers. When alternative suppliers are extracted, the presence of transaction records 4032 represents information indicating that there was past transactions between a buyer and a supplier.

The retrieval execution button 404 is a make decision button used to cause the input information received at the supplier retrieval condition entry region 400 to be stored in the retrieval condition storage portion 330.

FIG. 9 shows one example of configuration of a data table stored in the retrieval condition storage portion 330. The stored data table has at least the supplier name field 331 and parts name field 332 in which supplier names and parts names, respectively, are entered. The company name of a supplier is entered in the supplier name field 331. The name of a part which was purchased from a partner supplier but for which a selection of an alternative supplier is under discussion is placed in the parts name field 332. For example, according to the first record (second row) of the present database, "part A" is purchased from a supplier with supplier name "company N". The retrieval results indicate that alternatives to "part A" can be offered. That is, it can be seen that "company N" indicating a supplier name is entered in the supplier name field 331 and that "part A" for which a supplier capable of offering an alternative part should be retrieved is entered in the parts name field 332.

Retrieval conditions 403 accepted in the entry field of FIG. 5 may be stored in the retrieval condition storage portion 330, in addition to the supplier name 331 and parts name 332. For example, retrieval conditions about manufacturing bases and retrieval conditions about the results of transactions which are entered at the entry field of FIG. 5 may be stored in the manufacturing base condition storage portion 333 and transaction record condition storage portion 334, respectively, of the supplier information storage portion 310. Information representing retrieval conditions held in the manufacturing base condition storage portion 333 and transaction record condition storage portion 334 may be textual information. Alternatively, the information may be stored after converting the information into numerical data such as 0's and 1's.

Then, the control section 10 performs a processing routine for extracting suppliers from which alternative parts can be procured (step S003). The processing routine (S003) performed by the computing section 20 to extract candidate alternative suppliers is next described in detail.

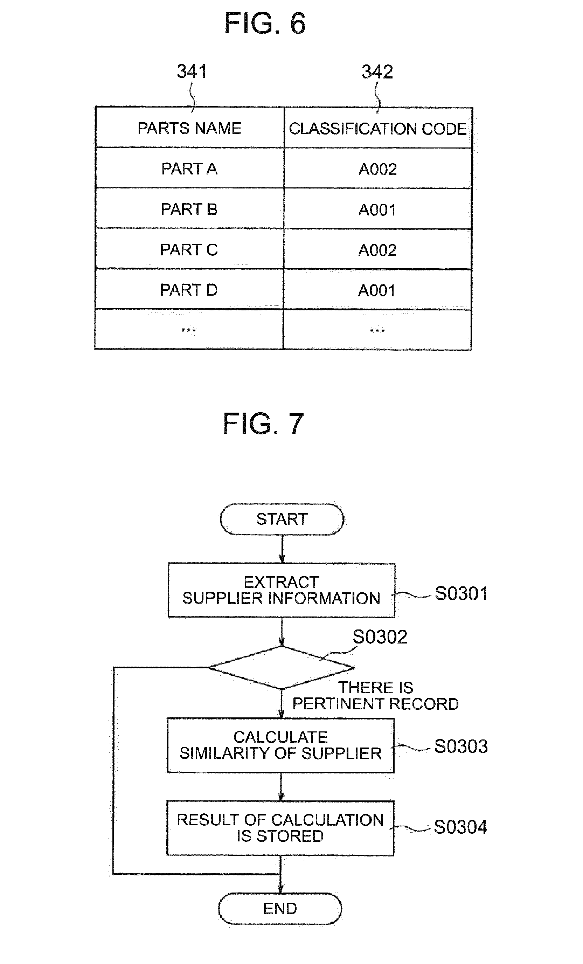

FIG. 7 is a flowchart illustrating one example of processing for extracting alternative suppliers. First, the computing section 20 collates the information stored in the retrieval condition storage portion 330 and the information stored in the supplier information storage portion 310. Specifically, the supplier names 311 in the supplier information storage portion 310 are retrieved using the supplier name entered in the supplier name field 331 of the retrieval condition storage portion 330 as a retrieval key (step S0301).

In the present embodiment, it is seen from the data table stored in the retrieval condition storage portion 330 that "company N" is entered in the supplier name field 331. Then, using information entered in the supplier name field 331 as a retrieval key, the supplier names in the supplier name field 331 of the data table stored in the supplier information storage portion 310 are collated and the classification code 312 of a corresponding record is extracted. More specifically, using "company N" entered in the supplier name field 331 as a retrieval key, the records in the supplier information storage portion 310 are retrieved. It is seen from the data table of FIG. 8 that there is a record of "company N" in the second record field of the supplier information storage portion 310 and that the classification code 312 is "A001". Then, the next record is retrieved. If there is a match of supplier name, then the corresponding classification code is extracted. The retrieval process described so far is repeated for every record stored in the supplier information storage portion 310.

FIG. 10 shows the results of the collation performed at step S0301 in a simulative manner. It can be seen from this figure that the classification codes of parts that can be offered from the retrieved "company N" are "A001", "A002", and "A003" owing to the execution of step S0301.

Subsequently to the execution of step S0301, a decision is made as to whether there is any record meeting the retrieval conditions (step S0302). If there is no pertinent record, the present processing routine is terminated. If there is at least one pertinent record, control proceeds to the next step.

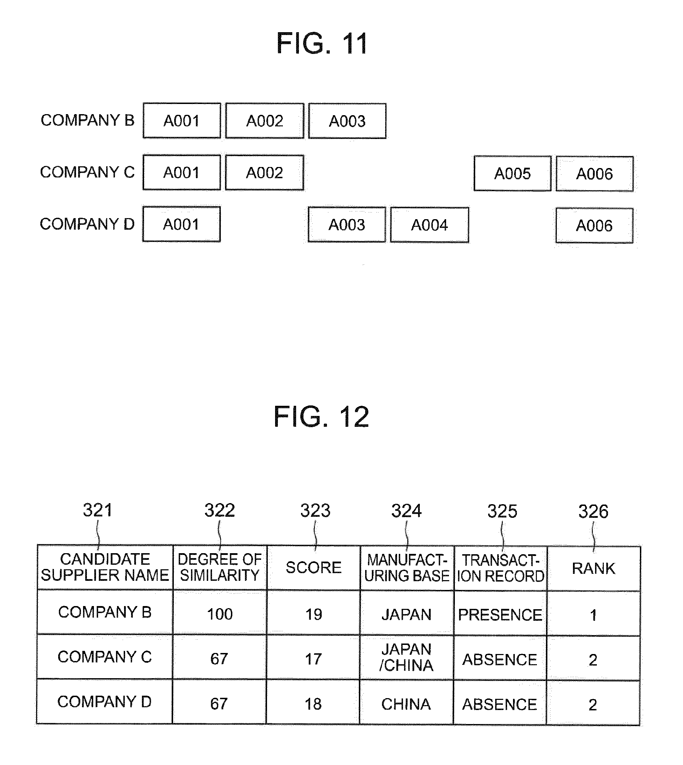

The computing section 20 then performs a processing routine for calculating degrees of similarity of suppliers to determine whether each retrieved supplier can act as an alternative supplier (S0303). FIG. 11 shows details of this routine in a simulative manner.

In step S0303, regarding all the suppliers stored in the supplier information storage portion 310, classification codes that can be offered from each supplier are extracted. It can be seen from FIG. 11 that the results of extraction of classification code 312 which can be offered by "company B" from the supplier information storage portion 310 indicate that A001, A002, A003 can be offered. Similarly, the results of extraction of classification code 312 that company C can offer show that A001, A002, A005, and A006 can be offered. Similarly, the results of extraction of classification code 312 which can be offered from company D indicate that A001, A003, A004, and A006 can be offered.

Then, the degree of coincidence with each combination with each classification code which can be offered by the retrieved supplier and which has been extracted as described above is calculated for each supplier. In the present embodiment, as shown in FIG. 10, classification codes that can be offered from company N are A001, A002, and A003, and classification codes that can be offered from company B are A001, A002, and A003. Thus, both sets of classification codes agree in code sequence. That is, both classification codes that can be offered are coincident. The degree of similarity is calculated by dividing the number of classification codes (denominator) held in a retrieved supplier by the number of coincident classification codes (numerator). That is, according to the present embodiment, the degree of similarity (%) = (number of coincident classification codes) / (number of classification codes held in the retrieved supplier) × 100 = 3/3 × 100 = 100%

The processing operation described so far is repeated for every supplier stored in the supplier information storage portion 310. The results of the computations performed in this way are stored in the decision result information storage portion 320 of the storage section 30 under control of the control section 10 (step S0304).

FIG. 12 shows one example of configuration of data table in the decision result information storage portion 320 of the storage section 30. At least candidate supplier names 321 and degrees of similarity 322 are stored in the decision result information storage portion 320. The candidate supplier names 321 are entered in a field where supplier names extracted at step S0303 are placed. The degrees of similarity 322 are entered in a field where the degrees of similarity calculated at step S0303 are placed. For example, it can be seen from the first record of the present data table that "company B" has been extracted as a candidate of an alternative supplier and that the degree of similarity with the retrieved supplier is "100%". That is, the degree of similarity of 100% of company B is placed in the field of degree of similarity 322 of the decision result information storage portion 320. Similar processing is carried out for companies C and D. Information is stored in the decision result information storage portion 320 as follows. When input information is accepted at the retrieval condition input screen, if there is information about manufacturing bases, then information about manufacturing bases of the supplier may be extracted from the field 313 for manufacturing base information of the supplier information storage portion 310 and placed in the field 324 for manufacturing base information of the decision result information storage portion 320. Information is stored in the decision result information storage portion 320 as follows. When input information is accepted at the retrieval condition input screen, if there is condition information about results of transactions, then information about the results of transactions of the supplier may be extracted from the field 314 for transactional results of the supplier information storage portion 310 and placed in the field 325 for transactional results of the decision result information storage portion 320.

In the foregoing process, the degrees of similarity of suppliers are calculated. Besides, evaluation values equivalent to the degrees of similarity can be found by the following method.

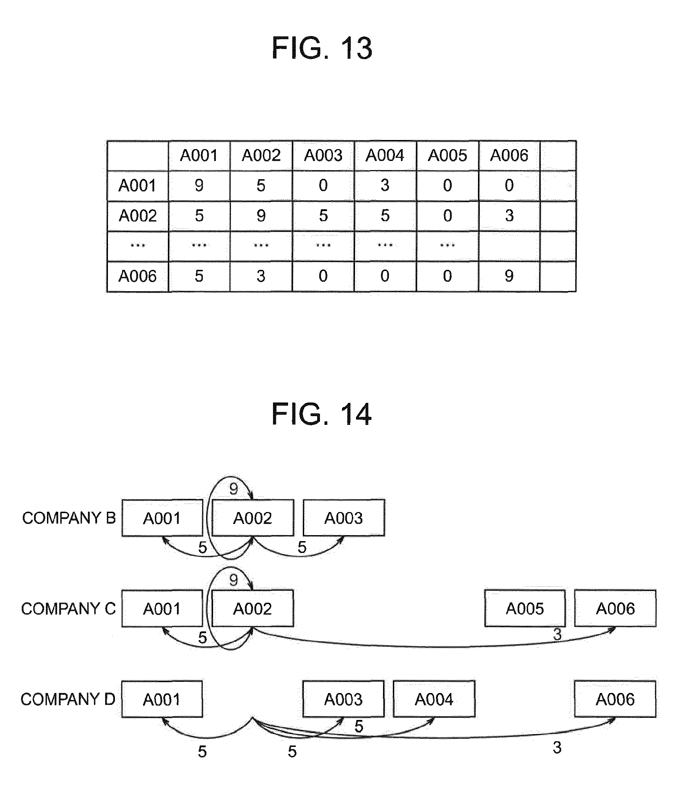

First, information as shown in FIG. 13 is previously accepted as inputs to the control section 10 from buyers or suppliers and stored in an inter-code distance information storage portion 350 of the storage portion 30.

FIG. 13 shows one example of configuration of a data table in which the degrees of similarity among classification codes are stored as distance information. Degrees of similarity are numerical representations of degrees of similarity among parts in terms of function, structure, size, and so on. Regarding an example of input of distance information, if there is no similarity at all, the information is represented as "0" in the present embodiment. As the degree of similarity increases, the value is increased correspondingly. The maximum value is indicated by "9". The scores of alternative suppliers are calculated by making use of the information stored in the inter-code distance storage portion 350.

Based on the parts name 332 entered from the input screen shown in FIG. 5, an input is accepted. Its classification code 312 is acquired from a classification master data storage portion 340.

FIG. 6 shows one example of configuration of the classification master data storage portion 340 of the storage section 30. The master data storage portion 340 includes at least a parts name area 341 and a classification code area 342. Based on the extracted classification code 312, the scores of alternative suppliers are calculated as described below. In the present embodiment, it is assumed that the parts name accepted at the input screen of FIG. 5 belongs to classification code "A002".

FIG. 14 schematically shows the processing for calculating the scores of alternative suppliers. In this example, classification codes 312 that can be offered from each supplier are extracted by processing similar to step S0303. For instance, classification codes that can be offered from company B are A001, A002, and A003. The scores of alternative suppliers for company B are calculated using information stored in the data table of FIG. 13. Combinations of parts names entered from retrieval conditions and classification codes capable of being offered from company B are extracted. The retrieval criterion is A002. The classification codes that can be offered from company B are A001, A002, and A003. Therefore, a first combination consists of A001 and A002. A second combination consists of A002 and A002. A third combination consists of A003 and A002. The distances among these combinations of the classification codes are extracted from the data table of FIG. 13, and the total sum is taken as the score of the alternative supplier. More specifically, it is seen from FIG. 13 that the distance between the classification codes A001 and A002 is 5, the distance between the codes A002 and A002 is 9, and the distance between the codes A003 and A002 is 5. Their sum can be calculated to be 5 + 9 + 5 = 19.

The score of the alternative supplier computed as described so far is stored in the decision result information storage portion 320 at step S0304. In particular, value 19 that is the calculated score of the alternative supplier for company B is placed in the degree of similarity field 322 of the decision result information storage portion 320. Similar processing is performed for company C. The score of the alternative supplier is calculated to be 17. Similar processing is performed for company D. The score of the alternative supplier can be calculated to be 18. These scores are stored in the score information storage portion 323 of the decision result information storage portion 320.

The processing steps S0302-S0304 included in the routine for judging degrees of similarity of suppliers have been described in detail thus far. In the present invention, company D that cannot offer parts of the classification code A002 can be extracted although the entered part name belongs to the classification code A002 as described previously. In the present invention, in the case of make-to-order products, the degrees of similarity of supply capability among suppliers can be evaluated if parts supplied from the suppliers are not uniform in specifications or if they do not belong to the same classification. The above example of the present invention is **characterized in that** company D can be evaluated to be similar in supply capability to company N although company D does not offer parts of classification code A002 and that candidate alternative suppliers which could not have been extracted by the prior art retrieval simply using parts names and classification codes can be extracted.

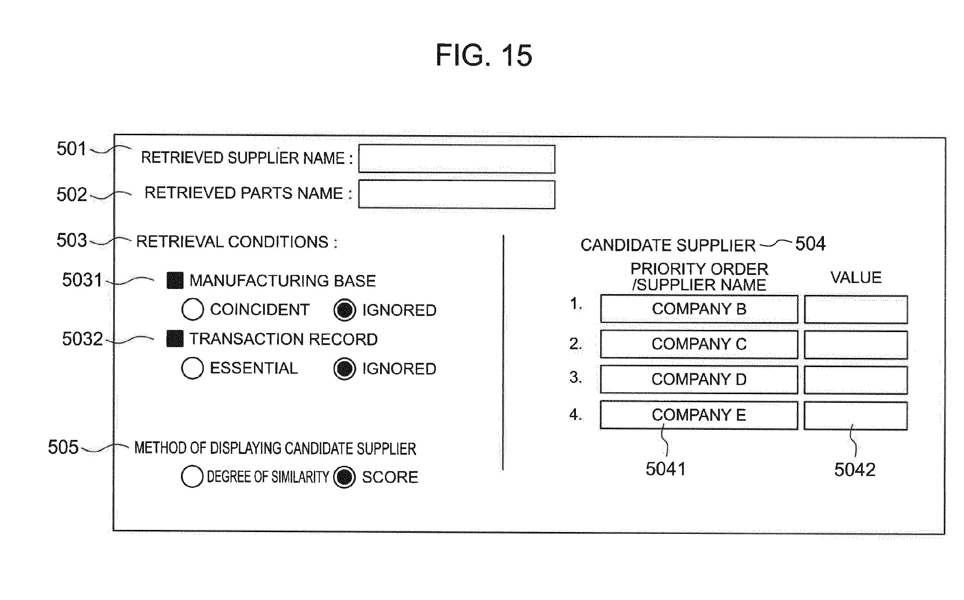

Returning to the routine of FIG. 3, the computing section 20 accepts information, which indicates the result of execution of step S003 and is stored in the decision result information storage portion 320, and performs output processing by means of the decision result output portion 130 of the control section 10 (step S004). Specifically, the decision result output portion 130 forms an output image 500 on the display screen of FIG. 15 in response to information from the decision result information storage portion 320 and displays the image on the output device 202.

FIG. 15 shows one example of configuration of the output image 500 on the display screen. The output image 500 includes at least a retrieved supplier name display area 501, a retrieved parts name display area 502, a candidate supplier display area 504, and a candidate supplier display method selection button 505. The retrieval conditions accepted at the supplier name entry field 401 of the supplier retrieval entry region 400 are displayed in the retrieved supplier name display area 501. The retrieval conditions accepted at the parts name entry field 402 of the supplier retrieval condition entry region 400 are displayed in the retrieved parts name display area 502. Supplier names are displayed in the candidate supplier display area 504 according to values indicated by ranking information 326 in the decision result information storage portion 320, the ranking information being determined by the results of display orders determined as described later.

A method of determining the order in which suppliers are sorted is described, the method being displayed in the candidate supplier display area 504. Supplier names are displayed in a supplier name area 5041. The value of a degree of similarity or of a score is displayed in a value area 5042 according to a selection made using the candidate supplier display method selection button 505. The order in which candidate suppliers is displayed are determined based on the retrieval conditions entered from the retrieval condition entry region 400 and on information entered using the candidate supplier display method selection button 505. In particular, in cases where conditions included in the retrieval conditions 403 about manufacturing bases or results of transactions are not accepted (both items are neglected) at the supplier retrieval condition entry region 400, if an input of "degree of similarity" is accepted using the candidate supplier display method selection button 505, then the values of degrees of similarity 322 in the decision result information storage portion 320 are ranked in decreasing order, and their values are stored in the ranking information area 326. In cases where conditions included in the retrieval conditions 403 about manufacturing bases or results of transactions are not accepted (both items are neglected) at the supplier retrieval condition entry region 400, if an input of "score" is accepted using the candidate supplier display method selection button 505, then the values of scores in the score information storage portion 323 of the decision result information storage portion 320 are ranked in decreasing order, and their values are stored in the ranking information area 326. In cases where conditions included in the retrieval conditions 403 about manufacturing bases or results of transactions are accepted at the supplier retrieval condition entry region 400, if an input of "degree of similarity" is accepted using the candidate supplier display method selection button 505, then only those of the records in the decision result information storage portion 320 which meet the retrieval conditions are extracted, the extracted records are ranked in decreasing degree of similarity 322, and their values are placed in the ranking information area 326. In cases where conditions included in the retrieval conditions 403 about manufacturing bases or results of transactions are accepted at the supplier retrieval condition entry region 400, if an input of "score" is accepted using the candidate supplier display method selection button 505, then only those of records in the decision result information storage portion 320 which meet the retrieval conditions are extracted. The values of these records in the score information storage portion 323 are ranked in decreasing order, and their values are stored in the ranking information area 326. The processing procedure described so far permits a buyer to select alternative suppliers.

In the present embodiment, during a retrieval for alternative suppliers, the degrees of similarity among partner suppliers are evaluated using the existing ordering conditions (supplier names and parts names) as retrieval keys as described above. Even when novel parts are retrieved, for example, candidate suppliers with which orders will be placed can be quickly presented by entering retrieval conditions about newly ordered parts from the retrieval screen and implementing the present invention.

It is to be understood that the present invention is not restricted to the above embodiments but rather various changes and modifications are possible. The above embodiments have been described in detail to explain the invention in an easily understandable manner. The invention is not restricted to one including all the configurations described. In addition, some configurations of some embodiment can be replaced by configurations of other embodiment. Furthermore, configurations of other embodiment can be added to configurations of one embodiment. Additionally, with respect to some configuration of each embodiment, other configurations may be added, deleted, or replaced.

Furthermore, the above-described configurations, functions, processing portions, and processing means may be realized in hardware. For example, all or some of them are designed using an integrated circuit. In addition, the above-described configurations and functions may be realized in software by causing a processor to interpret and execute programs that implement those functions. Programs, tables, files, and other information for realizing the functions can be placed in a memory, a hard disk, an SSD (solid-state drive), or other storage device or on a storage medium (such as IC card, SD card, or DVD).

Only those of control lines and information lines which are considered to be necessary for explanation are shown. Not all control lines and information lines of final products are shown. In practice, it can be considered that almost all configurations are interconnected.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A supplier retrieval apparatus (100) for retrieving suppliers, comprising:
a control section (10), a computing section (20), and a storage section (30) which are formed by a storage unit (205) and an arithmetic unit (204); wherein
said control section (10) has a supplier information input accepting portion (110) which receives names of suppliers and classification codes of parts capable of being offered by the suppliers;
said storage section (30) has a supplier information storage portion (310) which stores the supplier names and classification codes received by the supplier information input accepting portion (110);
said control section (10) has a retrieval condition processing portion (120) which receives retrieval conditions for retrieving the supplier information storage portion (310) for suppliers;
said computing section (20) has a retrieval condition meeting record extracting portion (210) which extracts supplier names acting as retrieval keys from the retrieval conditions received by the retrieval condition processing portion (120) and extracts classification codes offered by the suppliers;
said computing section (20) also has a supplier similarity decision portion (220) which makes decisions on suppliers capable of supplying classification codes similar to the classification codes offered by the suppliers from information about supplier names and classification codes stored in the supplier information storage portion (310); and
said control section (10) has a decision result output portion (130) which provides an output of results of the decisions made by the supplier similarity decision portion (220).

2. A supplier retrieval apparatus (100) for retrieving suppliers according to claim 1, wherein said similarity decision portion (220) makes decisions on suppliers in such a way that suppliers corresponding to more classification codes coincident with classification codes corresponding to a supplier acting as a retrieval key have higher degrees of similarity.

3. A supplier retrieval apparatus (100) for retrieving suppliers according to claim 1, wherein said supplier similarity decision portion (220) calculates alternative supplier scores of suppliers stored in said supplier information storage portion (310) based on distance information indicating degrees of similarity among previously stored classification codes, and the alternative supplier scores are values of distance information from classification codes identified by the retrieval conditions, and wherein said decision result output portion (130) outputs the calculated alternative supplier scores.

4. A supplier retrieval apparatus (100) for retrieving suppliers according to any one of claims 1 and 3, wherein
said supplier information storage portion (310) stores information about manufacturing bases of suppliers and information about results of past transactions;
said retrieval conditions are configured such that the information about manufacturing bases or the information about the results of the past transactions can be set; and
said decision result output portion (130) extracts suppliers having information coincident with information about the manufacturing bases or results of past transactions included in said retrieval conditions from the suppliers on which decisions are made by said supplier similarity decision portion (220) and outputs the extracted suppliers.

5. A method of retrieving suppliers by a supplier retrieval apparatus (100) in which a control section (10), a computing section (20), and a storage section (30) are formed by a storage unit (205) and an arithmetic unit (204), said method comprising the steps of:
receiving names of suppliers and classification codes of parts capable of being offered by the suppliers (S001);
storing the received supplier names and classification codes (S001);
receiving retrieval conditions for retrieving the stored suppliers (S002);
extracting supplier names acting as retrieval keys from the received retrieval conditions and extracting classification codes offered by the suppliers (S0301);
making decisions on suppliers capable of offering classification codes similar to the classification codes offered by the suppliers from information about the stored supplier names and classification codes (S003); and
outputting results of the decisions (S004).

6. A method of retrieving suppliers according to claim 5, wherein during the step of making the decisions on the suppliers (S003), suppliers corresponding to more classification codes coincident with classification codes corresponding to a supplier acting as a retrieval key are judged to have higher degrees of similarity (S0303).

7. A method of retrieving suppliers according to claim 5, wherein during the step of making the decisions on the suppliers (S003), alternative supplier scores of stored suppliers are calculated based on distance information indicating degrees of similarity among previously stored classification codes, and the alternative supplier scores are values of distance information from classification codes identified by the retrieval conditions (S0303), and wherein during the step of outputting the results (S004), the calculated alternative supplier scores are output.

8. A method of retrieving suppliers according to any one of claims 5 and 7, wherein
said storage section (30) stores information about manufacturing bases of suppliers and information about results of past transactions;
said retrieval conditions are configured such that the information about manufacturing bases or the information about the results of the past transactions can be set; and
suppliers having information coincident with information about the manufacturing bases or results of past transactions included in said retrieval conditions are extracted from the suppliers on which decisions have been made and are output.
